# EUROPEAN PATENT APPLICATION

(11) **EP 4 451 091 A1**
(43) Date of publication of application: **23.10.2024**
(21) Application number: 22917914.8
(22) Date of filing: 10.01.2022
(51) Int. Cl.: G06F 1/32, G06F 21/81

(54) **DATA PROCESSING METHOD AND ELECTRONIC DEVICE**

(71) Applicant: Huawei Technologies Co., Ltd., Shenzhen, Guangdong 518129 (CN)
(72) Inventor: LV, Jiantao, Shenzhen, Guangdong 518129 (CN)
(74) Representative: Maiwald GmbH
(86) International application number: PCT/CN2022/071003
(87) International publication number: WO 2023/130443

(57) **Abstract**

This application discloses a data processing method and an electronic device. In the method, when the electronic device enters a power-saving state, a processor may migrate target data in a first memory of a storage to a second memory of the processor, and then control to cut off power supply to the storage. Because time consumed by the processor to read data from a memory is shorter than that consumed by the processor to read data from a persistent storage unit of the storage, the method can not only reduce power consumption of the electronic device in the power-saving state, but also ensure read/write efficiency of the processor upon resumption of an operating state, thereby ensuring processing efficiency of the processor.

## Description

### TECHNICAL FIELD

This application relates to the field of electronic device technologies, and in particular, to a data processing method and an electronic device.

### BACKGROUND

Due to constraints of a battery capacity and a standby time, reducing power consumption of an electronic device as much as possible is a research direction in this field. Currently, an electronic device generally has at least two states: an operating state and a power-saving state. A mobile phone or a computer is used as an example, the operating state may be a screen-on state, and the power-saving state may be a screen-off state. When the electronic device is in the power-saving state, to further reduce power consumption, the electronic device may power off a power-consuming component other than a processor.

As main storage space of the electronic device, a storage has high power consumption during power-on. Therefore, in a power-saving solution, when the electronic device enters the power-saving state, the storage is not powered off. However, in this solution, the storage still causes high power consumption, and power-saving effect of the electronic device is not significant.

The storage usually includes two parts: a memory and a persistent storage unit. The memory has a faster read/write speed than the persistent storage unit. Therefore, the memory stores some temporary data inside the storage or the processor. In another power-saving solution, when the electronic device enters the power-saving state, the storage stores the data in the memory into the persistent storage unit, and then the storage is powered off. However, when the electronic device resumes the operating state, the processor needs to read the temporary data from the persistent storage unit, resulting in a long read/write time of the processor.

In conclusion, how to improve read/write efficiency of the processor in the electronic device while reducing power consumption of the electronic device as much as possible is a problem to be urgently resolved in this field.

### SUMMARY

This application provides a data processing method and an electronic device, to improve read/write efficiency of a processor in the electronic device while reducing power consumption of the electronic device.

According to a first aspect, an embodiment of this application provides a data processing method. The method may be applied to a processor of an electronic device, and the method includes the following steps.

When the electronic device enters a power-saving state, the processor sends a first message to a storage of the electronic device, where the first message notifies the storage to send target data stored into a first memory to the processor, and the first memory is an internal memory of the storage; the processor receives the target data from the storage, and stores the target data into a second memory, where the second memory is an internal memory of the processor; and finally, the processor controls to cut off power supply to the storage.

In the method, when the electronic device enters the power-saving state, the processor may migrate the target data in the first memory of the storage to the second memory of the processor, and then control to cut off power supply to the storage. In this way, when the electronic device resumes an operating state, the processor may directly execute a service of the electronic device based on the target data in the second memory; or the processor migrates the target data in the second memory back to the first memory, and executes a service of the electronic device based on the target data in the first memory. Because time consumed by the processor to read data from a memory is shorter than that consumed by the processor to read data from a persistent storage unit of the storage, the method can not only reduce power consumption of the electronic device in the power-saving state, but also ensure read/write efficiency of the processor upon resumption of the operating state, thereby ensuring processing efficiency of the processor.

In addition, because the electronic device usually frequently switches between the power-saving state and the operating state, compared with a conventional solution of making the target data in the first memory of the storage persistent, the method provided in this embodiment of this application can avoid a process in which the target data is written to the persistent storage unit and read from the persistent storage unit due to state switching. This can greatly reduce times of reading from and writing to the persistent storage unit, reduce a life loss of the persistent storage unit, and prolong a service life of the persistent storage unit.

In a possible design, before controlling to cut off power supply to the storage, the processor may further receive a second message from the storage, where the second message notifies that transmission of the target data in the first memory ends.

According to this design, the processor may cut off power supply to the storage after transmission of the data stored into the first memory ends. This avoids a problem that data disappears after a power failure because power supply to the storage is cut off when the data in the first memory is to be transmitted.

In a possible design, a manner in which the processor controls to cut off power supply to the storage may include but is not limited to the following manners.

Manner 1: The processor sends a first power-off indication to the storage, where the first power-off indication indicates the storage to cut off power supply.

Manner 2: The processor sends a second power-off indication to a power management module of the electronic device, where the second power-off indication indicates the power management module to cut off power supply to the storage.

Manner 3: The first message sent by the processor may further indicate the storage to be powered off by itself after transmission of the target data ends.

In a possible design, when the electronic device enters an operating state, the processor may further control to resume power supply to the storage; and then the processor implements a service of the electronic device based on the target data stored into the second memory.

This design can avoid repeated transmission of the target data. This shortens a delay of reading the target data by the processor, can improve the read/write efficiency of the processor upon resumption of the operating state, and can ensure the processing efficiency of the processor.

In a possible design, when the electronic device enters an operating state, the processor may further control to resume power supply to the storage; then the processor sends the target data in the second memory to the storage, so that the storage stores the target data back into the first memory; and finally, the processor may implement a service of the electronic device based on the target data stored into the first memory.

The time consumed by the processor to read the data from the memory is shorter than that consumed by the processor to read the data from the persistent storage unit of the storage. Therefore, this design can ensure the read/write efficiency of the processor upon resumption of the operating state, thereby ensuring processor efficiency of the processor and ensuring working efficiency of the storage.

In addition, because the target data stored into the first memory may include data or instructions required for running of a storage controller, after the electronic device resumes the operating state, the target data needs to be restored to the first memory, to ensure normal operation of the storage. According to this design, the target data migrated out of the first memory may be restored to the first memory, to ensure operation of the storage and further ensure operation of the electronic device.

In a possible design, before sending the target data in the second memory to the storage, the processor may further receive a third message from the storage, where the third message is used to request the target data.

According to this design, the processor may restore the target data to the first memory when receiving a request from the storage.

In a possible design, the processor may control, in the following manners, to resume power supply to the storage.

Manner 1: The processor sends a first power-on indication to the storage, where the first power-on indication indicates the storage to resume power supply.

Manner 2: The processor sends a second power-on indication to the power management module of the electronic device, where the second power-on indication indicates the power management module to resume power supply to the storage.

In a possible design, when cutting off power supply to the storage, the processor may further power off a link between the processor and the storage, to further reduce power consumption of the electronic device in the power-saving state. Correspondingly, when resuming power supply to the storage, the processor may further power on a link between the processor and the storage. For example, the link between the storage and the storage includes an interface unit in the processor and an interface unit in the storage.

According to a second aspect, an embodiment of this application provides a data processing method. The method may be applied to a storage of an electronic device, and the method includes the following steps.

When the electronic device enters a power-saving state, the storage receives a first message from a processor of the electronic device; and the storage sends, based on the first message, target data stored into a first memory to the processor, so that the processor stores the target data into a second memory, where the first memory is an internal memory of the storage, and the second memory is an internal memory of the processor.

In the method, when the electronic device enters the power-saving state, the processor may migrate the target data in the first memory of the storage to the second memory of the processor, and then control to cut off power supply to the storage. In this way, when the electronic device resumes an operating state, the processor may directly execute a service of the electronic device based on the target data in the second memory; or the processor migrates the target data in the second memory back to the first memory, and executes a service of the electronic device based on the target data in the first memory. Because time consumed by the processor to read data from a memory is shorter than that consumed by the processor to read data from a persistent storage unit of the storage, the method can not only reduce power consumption of the electronic device in the power-saving state, but also ensure read/write efficiency of the processor upon resumption of the operating state, thereby ensuring processing efficiency of the processor.

In addition, because the electronic device usually frequently switches between the power-saving state and the operating state, compared with a conventional solution of making the target data in the first memory of the storage persistent, the method provided in this embodiment of this application can avoid a process in which the target data is written to the persistent storage unit and read from the persistent storage unit due to state switching. This can greatly reduce times of reading from and writing to the persistent storage unit, reduce a life loss of the persistent storage unit, and prolong a service life of the persistent storage unit.

In a possible design, after sending the target data stored into the first memory to the processor, the storage may further send a second message to the processor, where the second message notifies that transmission of the target data in the first memory ends.

According to this design, the storage may notify the processor after transmission of the target data in the first memory ends, so that the processor can control to cut off power supply to the storage. The method can avoid a problem that data disappears after a power failure because power supply to the storage is cut off by the processor when the data in the first memory is to be transmitted.

In a possible design, after sending the target data stored into the first memory to the processor, the storage may cut off power supply to the storage.

In a possible design, the storage may cut off power supply to the storage in the following manners.

Manner 1: A first power-off indication from the processor is received, and power supply to the storage is cut off based on the first power-off indication.

Manner 2: The first message may further indicate the storage to be powered off by itself after transmission of the target data ends. After sending the target data stored into the first memory to the processor, the storage may cut off power supply to the storage by itself.

In a possible design, when the electronic device enters an operating state, the storage may further resume power supply to the storage.

In a possible design, after resuming power supply, the storage may further receive the target data from the processor, and store the target data back into the first memory.

According to this design, after the electronic device resumes the operating state, the processor may restore the target data to the first memory.

In a possible design, before receiving the target data from the processor, the storage may send a third message to the processor, where the third message is used to request the target data.

According to this design, after resuming power supply, the storage may request the processor to restore the target data to the first memory.

In a possible design, the storage may resume power supply to the storage in the following manners.

The storage receives a first power-on indication from the processor, and resumes power supply to the storage based on the first power-on indication.

Optionally, a logic circuit may be disposed in a storage controller. When the logic circuit receives a first signal conforming to a specific waveform, a power supply switch of the storage may be turned on, to resume power supply to the storage. When the logic circuit receives a second signal conforming to another specific waveform, the power supply switch of the storage may be turned off, to cut off power supply to the storage. Therefore, the controller may send the second signal (namely, the first power-off indication) to the storage controller when power supply to the storage needs to be cut off, and send the first signal (namely, the first power-on indication) to the storage controller when power supply to the storage needs to be resumed.

According to a third aspect, an embodiment of this application provides a processor, where the processor includes a second memory, a control unit, and a communication unit, the communication unit is configured to receive and send data, and the control unit is configured to perform the method provided in the first aspect.

According to a fourth aspect, an embodiment of this application provides a storage, where the processor includes a first memory, a storage control unit, and a communication unit, the communication unit is configured to receive and send data, and the storage control unit is configured to perform the method provided in the second aspect.

According to a fifth aspect, an embodiment of this application provides an electronic device, where the electronic device includes a processor and a storage, the processor is configured to perform the method provided in the first aspect, and the storage is configured to perform the method provided in the second aspect.

According to a sixth aspect, an embodiment of this application further provides a computer program. When the computer program is run on a computer, the computer is enabled to perform the method provided in any one of the foregoing aspects.

According to a seventh aspect, an embodiment of this application further provides a computer-readable storage medium. The computer-readable storage medium stores a computer program. When the computer program is executed by a computer, the computer is enabled to perform the method provided in any one of the foregoing aspects.

According to an eighth aspect, an embodiment of this application further provides a chip. The chip is configured to read a stored computer program, to perform the method provided in any one of the foregoing aspects.

### BRIEF DESCRIPTION OF DRAWINGS

FIG. 1 is a diagram of a structure of an electronic device according to an embodiment of this application;
FIG. 2 is a diagram of an architecture between a processor and a storage in an electronic device according to an embodiment of this application;
FIG. 3 is a flowchart of a data processing method according to an embodiment of this application;
FIG. 4 is a schematic diagram of a data processing method according to an embodiment of this application;
FIG. 5 is a diagram of a structure of a storage according to an embodiment of this application;
FIG. 6 is a diagram of a structure of a processor according to an embodiment of this application; and
FIG. 7 is a diagram of a structure of an electronic device according to an embodiment of this application.

### DESCRIPTION OF EMBODIMENTS

This application provides a data processing method and an electronic device, to improve read/write efficiency of a processor in the electronic device while reducing power consumption of the electronic device. The method and the device are based on a same technical concept. Because the method and the electronic device have similar principles for resolving the problem, reference may be mutually made to implementations of the electronic device and the method. No repeated description is provided.

The following describes some terms in this application, to facilitate understanding of persons skilled in the art.
(1) An electronic device is a device or an apparatus that has data calculation, processing, and storage functions. For example, the electronic device may be a mobile phone, a tablet computer, a notebook computer, a netbook, a vehicle-mounted device, a smart home device (for example, a smart television), a business intelligent terminal (including a video phone, a conference desktop intelligent terminal, and the like), a personal digital assistant (personal digital assistant, PDA), an augmented reality (augmented reality, AR)/virtual reality (virtual reality, VR) device, or the like. A specific form of the electronic device is not limited in this application.
(2) Power-on and power-off of a component: Power-on indicates that a power supply (power supplying) of a component (for example, a storage) is started or resumed, that is, a power supply switch is turned on, and a power supply circuit of the component is connected. Power-off indicates that a power supply of a component is cut off to stop power supplying, that is, a power supply switch is turned off, and a power supply circuit of the component is disconnected.
(3) The term "and/or" describes an association relationship for describing associated objects and indicates that three relationships may exist. For example, A and/or B may indicate the following three cases: Only A exists, both A and B exist, and only B exists. The character "/" usually indicates an "or" relationship between the associated objects.

It should be noted that "a plurality of in this application means two or more than two. "At least one" means one or more.

In addition, it should be understood that in descriptions of this application, terms such as "first" and "second" are merely used for distinguishing and description, but should not be understood as indicating or implying relative importance, or should not be understood as indicating or implying a sequence.

The following describes in detail embodiments of this application with reference to accompanying drawings.

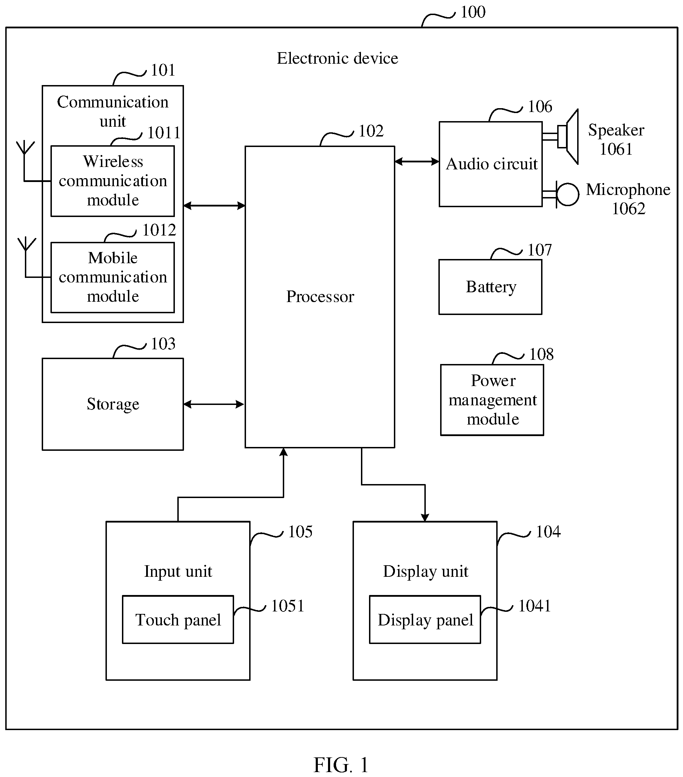

A data processing method provided in embodiments of this application may be applied to an electronic device. FIG. 1 shows a possible structure of the electronic device. As shown in FIG. 1, the electronic device 100 includes components such as a communication unit 101, a processor 102, a storage 103, a display unit 104, an input unit 105, an audio circuit 106, a battery 107, and a power management module 108. The following specifically describes each component of the electronic device 100 with reference to FIG. 1.

The communication unit 101 is configured to implement a data connection function of the electronic device 100, to implement data communication with another device. Optionally, the communication unit 101 may include a wireless communication module 1011 and a mobile communication module 1012. In addition to the communication unit 101, the electronic device 100 may further match components such as an antenna, and a modem processor and a baseband processor in the processor 102, to implement a communication function.

The wireless communication module 1011 may provide a wireless communication solution that is applied to the electronic device, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 1011 may be one or more components integrating at least one communication processing module. The wireless communication module 1011 receives an electromagnetic wave through the antenna, performs signal frequency modulation and filtering processing on the electromagnetic wave, and sends a processed signal to the processor 102. The wireless communication module 1011 may further receive a to-be-sent signal from the processor 102, perform frequency modulation and amplification on the signal, and convert a processed signal into an electromagnetic wave for radiation through the antenna.

The mobile communication module 1012 may provide a mobile communication solution that is applied to the electronic device and that includes 2G/3G/4G/5G. The mobile communication module 1012 may include at least one filter, a switch, a power amplifier, a low noise amplifier (low noise amplifier, LNA), and the like. The mobile communication module 1012 may receive an electromagnetic wave through the antenna, perform processing such as filtering and amplification on the received electromagnetic wave, and transmit a processed electromagnetic wave to the modem processor for demodulation. The mobile communication module 1012 may further amplify a signal modulated by the modem processor, and convert the signal into an electromagnetic wave for radiation through the antenna. In some embodiments, at least some functional modules of the mobile communication module 1012 may be disposed in the processor 102. In some embodiments, at least some functional modules of the mobile communication module 1012 and at least some modules of the processor 102 may be disposed in a same component. The electronic device 100 may establish a wireless connection to a base station in a mobile communication system through the mobile communication module 1012, and receive a service of the mobile communication system through the mobile communication module 1012.

The communication unit 101 may further include a communication interface, configured to implement a physical connection between the electronic device 100 and another device. The communication interface may be connected to a communication interface of the another device through a cable, to implement data transmission between the electronic device 100 and the another device. For example, the electronic device 100 may be connected to a device such as a headset or a stereo through the communication interface.

The storage 103 may be configured to store a software program and data. The processor 102 runs the software program and the data that are stored in the storage 103, to perform various functions and data processing of the electronic device 100. For example, the storage 103 may be a solid state drive (solid state drive, SSD), a universal flash storage (universal flash storage, UFS), a flash memory, an optical disc, a magnetic disk, another magnetic storage device, or another component including a nonvolatile solid-state storage medium.

It should be noted that, in embodiments of this application, the storage 103 mainly includes two storage units: a memory and a persistent storage unit. The memory is an internal memory of the storage 103, and features a fast access rate. When the storage 103 is powered off or the electronic device 100 is powered off, data is lost, and the memory is configured to store temporary data that is being executed. To be distinguished from a memory of the processor 102, the memory of the storage 103 may be referred to as a first memory. The persistent storage unit is formed by a persistent (nonvolatile) storage medium. When the storage 103 is powered off or the electronic device 100 is powered off, data is not lost, and the data can be stored for a long time. Optionally, the persistent storage unit may store various software programs, user data, and the like.

The input unit 105 may be configured to receive character information and a signal that are input by a user. Optionally, the input unit 105 may include a touch panel 1051 and another input device (for example, a function key). The touch panel 1051, also referred to as a touchscreen, may collect a touch operation performed by the user on or near the touch panel, generate corresponding touch information, and send the touch information to the processor 102, to enable the processor 102 to execute a command corresponding to the touch information. The touch panel 1051 may be implemented in a plurality of types such as a resistive type, a capacitive type, an infrared type, and a surface acoustic wave type.

The display unit 104 is configured to present a user interface, to implement humancomputer interaction. For example, the display unit 104 may display information input by the user or information provided for the user, and content such as various menus of the electronic device 100, various home screens (including icons of various applications), windows of various applications, and images shot by a camera.

The display unit 104 may include a display panel 1041. The display panel 1041 is also referred to as a display, and may be configured in a form of a liquid crystal display (liquid crystal display, LCD), an organic light-emitting diode (organic light-emitting diode, OLED), or the like.

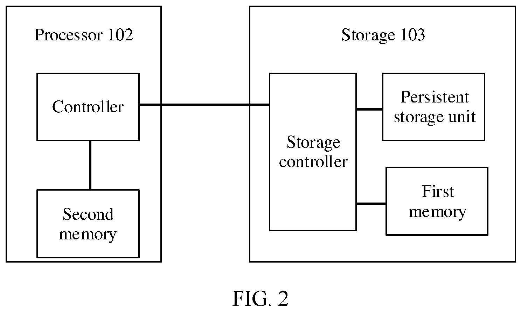

It should be noted that the touch panel 1051 may cover the display panel 1041. In FIG. 2, the touch panel 1051 and the display panel 1041 serve as two independent components to implement input and output functions of the electronic device 100. However, in this embodiment of this application, the touch panel 1051 and the display panel 1041 may be integrated (namely, a touch display) to implement the input and output functions of the electronic device 100.

The processor 102 is a control center of the electronic device 100, connects to the components through various interfaces and lines, and runs or executes the software program stored in the storage 103 and invokes the data stored in the storage 103, to perform various functions of the electronic device 100 and process the data, so as to implement a plurality of services of the electronic device 100. The processor 102 may also be referred to as a host (host).

Optionally, the processor 102 may include one or more processing units. For example, the processor 102 may include an application processor (application processor, AP), a network processor (network processor, NP), a modem processor, a baseband processor, a graphics processing unit (graphics processing unit, GPU), an image signal processor (image signal processor, ISP), a controller, a calculator, a video codec, a digital signal processor (digital signal processor, DSP), a baseband processor, and a neural-network processing unit (neural-network processing unit, NPU). Different processing units may be independent components, or may be integrated into one or more processors 102. The controller may be a nerve center and a command center of the electronic device. The controller may generate an operation control signal based on instruction operation code and a time sequence signal, to complete control of instruction reading and instruction execution. In addition, the processor 102 may further include a hardware chip, for example, at least one or a combination of the following: an application-specific integrated circuit (application-specific integrated circuit, ASIC), a programmable logic device (programmable logic device, PLD), a microcontroller unit (microcontroller unit, MCU), and a single-chip microcomputer. The PLD may be a complex programmable logic device (complex programmable logic device, CPLD), a field-programmable gate array (field-programmable gate array, FPGA), generic array logic (generic array logic, GAL), or any combination thereof.

It should be noted that, in this embodiment of this application, an internal memory of the processor 102, namely, the memory of the processor 102, is further disposed in the electronic device 100. To be distinguished from the memory of the storage 103, the memory of the processor 102 may be referred to as a second memory. Optionally, the second memory is configured to store temporary instructions and data of the processor 102 in a running process.

It should be noted that, in this embodiment of this application, the first memory or the second memory may be a cache, a random access memory (random access memory, RAM), or the like. The first memory or the second memory may store instructions or data recently used or cyclically used by the processor 102. In this way, if the processor 102 needs to use the instructions or the data again, the instructions or the data may be directly invoked from the first memory or the second memory. This can avoid a process of repeated access in the persistent storage unit, can reduce read/write duration of the processor 102, and further improve working efficiency of the processor 102.

The audio circuit 106 may provide an audio interface between the user and the electronic device 100. As shown in FIG. 1, the audio circuit 106 may include a speaker 1061 and a microphone 1062. The audio circuit 106 may convert received audio data into an electrical signal and then transmit the electrical signal to the speaker 1061, and the speaker 1061 converts the electrical signal into a sound signal for output. In addition, the microphone 1062 converts a collected sound signal into an electrical signal, and the audio circuit 106 receives the electrical signal, and then converts the electrical signal into audio data for further processing such as transmission or storage.

The battery 107 is configured to store electric energy.

The power management module 108 is connected to the battery 107 and other power-consuming components (for example, the processor 102, the storage 103, the display unit 104, and the camera) in the electronic device 100, and is configured to supply power to these power-consuming components.

Optionally, in this embodiment of this application, a manner in which any power-consuming component is powered on/off may include but is not limited to the following implementations.

In some implementations, the power management module 108 may further control power-on and power-off of the power-consuming component. For example, the power management module 108 may turn on or turn off a power supply switch of the power-consuming component, to connect or disconnect a power supply circuit of the power-consuming component, so that the power-consuming component is powered on or powered off.

In some other implementations, the processor 102 may indicate the power-consuming component to be powered on or powered off by itself. For example, the processor 102 may send a power-on/power-off indication to the power-consuming component, to indicate the power-consuming component to cut off or resume power supply.

Persons skilled in the art may understand that the structure of the electronic device 100 shown in FIG. 1 does not constitute a limitation on an electronic device to which this application is applicable. The electronic device to which this embodiment of this application is applicable may include more or fewer components than those shown in the figure, or combine some components, or have different component arrangements. For example, the electronic device may further include a sensor, a camera, a charging management module, and the like.

Based on the electronic device shown in FIG. 1, the following describes an architecture between the processor 102 and the storage 103 in the electronic device 100 with reference to FIG. 2.

As shown in FIG. 2, the electronic device 100 includes the processor 102 and the storage 103. The storage 103 can store a software program and data. The processor 102 may run the software program stored in the storage 103 and invoke the data in the storage 103, to execute various functions and services of the electronic device 100. Optionally, the processor 102 and the storage 103 may communicate with each other through at least one of the following interfaces: a universal flash storage (universal flash storage, UFS) interface and a small computer system interface (small computer system interface, SCSI).

As shown in the figure, in this embodiment of this application, the storage 103 includes at least a storage controller, a persistent storage unit, and an internal memory of the storage 103 (which is briefly referred to as a first memory).

The storage controller can implement communication and interaction between the storage 103 and the processor 102, and can implement functions such as space management and space mapping on storage space in the first memory and storage space in the persistent storage unit.

The first memory is configured to store temporary data or instructions of the storage 103, or data or instructions that need to be cyclically used.

The persistent storage unit can store a software program, user data, and the like of the electronic device 100 for a long time.

The processor 102 includes at least a controller and an internal memory of the processor 102 (which is briefly referred to as a second memory).

The controller, as a command center of the electronic device 100, is configured to implement control and management functions of the processor 102, and can generate an operation control signal based on instruction operation code and a time sequence signal, to complete control of instruction reading or instruction execution.

The second memory is configured to store temporary data or instructions of the processor 102, or data or instructions that need to be cyclically used.

Two states may be defined for the electronic device 100 that is powered on: an operating state and a power-saving state, to reduce power consumption of the electronic device. For example, the operating state may be a screen-on state, and the power-saving state may be a screen-off (black screen) state.

Even if the electronic device 100 is in the power-saving state, the processor 102 is in a power-conserving state, that is, the second memory and the controller in the processor 102 are in a continuous power-conserving state, to ensure that the electronic device 100 can quickly resume a service. Another power-consuming component may be powered off when the electronic device 100 is in the power-saving state.

When the storage 103 is powered off when the electronic device 100 is in the power-saving state, the storage controller in the storage 103 usually migrates data stored into the first memory to the persistent storage unit. However, when the electronic device 100 resumes the operating state, the processor 102 needs to read, from the persistent storage unit in the storage 103, the data originally stored in the first memory. This results in a long read/write time of the processor 102, and affects processing efficiency of the processor 102.

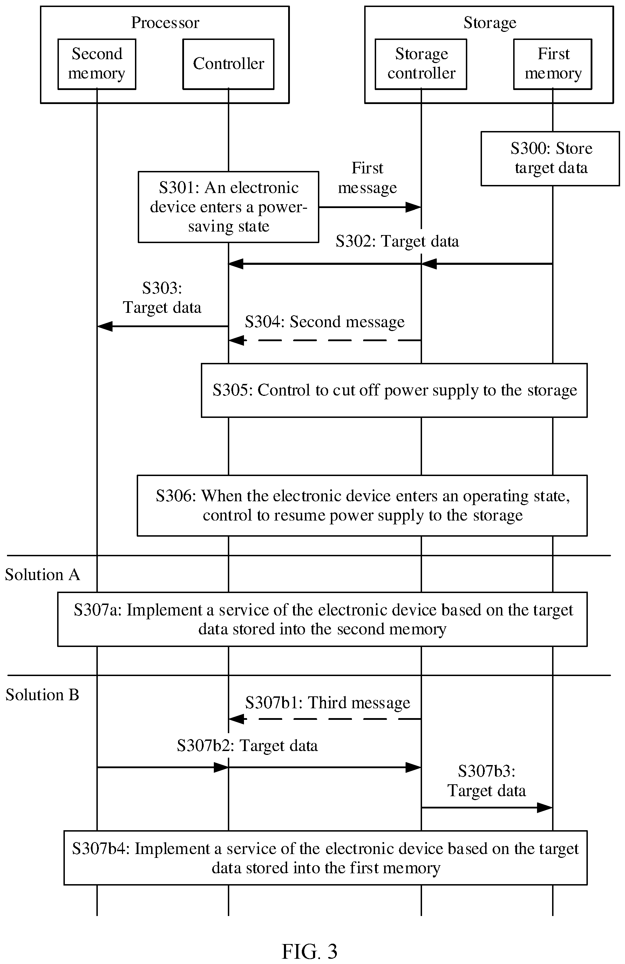

To ensure read/write efficiency of a processor of an electronic device while reducing power consumption of the electronic device, an embodiment of this application provides a data processing method. The method is applicable to the electronic device shown in FIG. 1, for example, the architecture shown in FIG. 2. The following describes in detail the method provided in embodiments of this application with reference to the method flowchart shown in FIG. 3. For ease of distinguishing, in this embodiment of this application, an internal memory of a storage is referred to as a first memory, and an internal memory of the processor is referred to as a second memory.

It should be noted that this application is described by using an example in which the method is performed by a controller in the processor and a storage controller in the storage. However, the method does not constitute a limitation on an application scenario of the method. In some embodiments, the storage and the storage may respectively perform steps of the controller and the storage controller in FIG. 3.

S300: In a process in which the electronic device executes a service, target data is stored into the first memory in the storage of the electronic device.

The target data may be temporary data or instructions in the storage, or instructions or data that needs to be cyclically used by the storage.

S301: When the electronic device enters a power-saving state, the controller in the processor sends a first message to the storage controller in the storage. The first message notifies the storage (namely, the storage controller) to send the target data stored into the first memory to the processor (namely, the controller). The storage controller receives the first message from the controller.

This step may be performed when the electronic device is about to enter the power-saving state (namely, within first specified duration before entering the power-saving state), when the electronic device enters the power-saving state, or when the electronic device just enters the power-saving state (namely, within second specified duration after entering the power-saving state). This is not limited in this application.

Optionally, the first message may further indicate the storage to be powered off after transmission of the target data ends. In this case, the first message may also be referred to as a lowpower consumption request.

S302: The storage controller sends, to the controller based on the first message, the target data stored into the first memory. The controller receives the target data from the storage.

Optionally, before S302 is performed, the storage controller may alternatively send characteristic information of the target data to the controller. The characteristic information may be but is not limited to a data amount of the target data, a type of the target data, and the like.

In step S302, the storage controller may send the target data in the following two steps: The storage controller may read the target data from the first memory, and then send the target data to the controller.

It should be noted that the storage controller may transmit all the target data to the processor through reading and transmission for one or more times.

In this embodiment, the storage controller (namely, the storage) and the controller (namely, the processor) may communicate with each other through a UFS interface or an SCSI.

S303: The controller stores the received target data into the second memory of the processor.

S304: Optionally, after transmitting all the target data in the first memory to the controller, the storage controller may further send a second message to the controller. The second message notifies that transmission of the target data in the first memory ends. The controller receives the second message from the storage controller.

S305: The controller controls to cut off power supply to the storage. The storage cuts off power supply.

Optionally, after receiving the second message or after failing to receive the target data within continuous specified duration, the controller may control to cut off power supply to the storage.

Optionally, in this embodiment of this application, a manner in which the controller cuts off power supply to the storage may include but is not limited to the following manners.

Manner 1: The controller sends a first power-off indication to the storage controller, where the first power-off indication indicates the storage to cut off power supply. In this way, after receiving the first power-off indication from the controller, the storage controller may cut off power supply to the storage based on the first power-off indication.

Manner 2: The controller sends a second power-off indication to a power management module of the electronic device, where the second power-off indication indicates the power management module to cut off power supply to the storage. In this way, after receiving the second power-off indication, the power management module may cut off power supply to the storage.

Manner 3: When the first message further indicates the storage to be powered off after transmission of the target data ends, the storage controller may be powered off by itself after transmission of the target data is completed.

According to the foregoing steps, when the electronic device enters the power-saving state, the controller may migrate the target data stored into the first memory in the storage to the second memory of the processor, and power off the storage. Because time consumed by a processor to read data from the memory is shorter than that consumed by the processor to read data from a persistent storage unit of the storage, the method can not only reduce power consumption of the electronic device in the power-saving state, but also ensure read/write efficiency of the processor upon resumption of an operating state, thereby ensuring processing efficiency of the processor.

S306: When the electronic device enters the operating state, the controller controls to resume power supply to the storage.

Optionally, this step may be performed when the electronic device enters the operating state, or after the electronic device just enters the operating state (namely, within third specified duration after the electronic device enters the operating state). This is not limited in this application.

Similar to S305, a manner in which the controller resumes power supply to the storage may include but is not limited to the following manners.

Manner 1: The controller sends a first power-on indication to the storage controller, where the first power-on indication indicates the storage to resume power supply. In this way, after receiving the first power-on indication from the controller, the storage controller may resume power supply to the storage based on the first power-on indication.

Optionally, a logic circuit may be disposed in the storage controller. When the logic circuit receives a first signal conforming to a specific waveform, a power supply switch of the storage may be turned on, to resume power supply to the storage. When the logic circuit receives a second signal conforming to another specific waveform, the power supply switch of the storage may be turned off, to cut off power supply to the storage. Therefore, the controller may send the second signal (namely, the first power-off indication) to the storage controller when power supply to the storage needs to be cut off, and send the first signal (namely, the first power-on indication) to the storage controller when power supply to the storage needs to be resumed.

Manner 2: The controller sends a second power-on indication to the power management module of the electronic device, where the second power-on indication indicates the power management module to resume power supply to the storage. In this way, after receiving the second power-on indication, the power management module may resume power supply to the storage.

It should be further noted that, because a link for communication and interaction between the processor and the storage also consumes power, the controller may further power off the link between the processor and the storage when cutting off power supply to the storage in S305, to further reduce power consumption of the electronic device in the power-saving state. Therefore, when resuming power supply to the storage in S306, the controller may further power on the link between the processor and the storage. The link between the processor and the storage includes an interface unit in the processor and an interface unit in the storage. For example, the interface unit may be a UFS protocol information unit (UFS protocol information unit, UPIU) or an SCSI unit.

In this embodiment of this application, when the electronic device enters the operating state, the processor and the storage may resume the service of the electronic device by using the following two solutions.

Solution A: As shown in FIG. 3, step S307a is included.

S307a: The processor (including the controller) may implement the service of the electronic device based on the target data stored into the second memory.

This solution can avoid repeated transmission of the target data. This shortens a delay of reading the target data by the processor, can improve the read/write efficiency of the processor upon resumption of the operating state, and can ensure the processing efficiency of the processor.

Solution B: As shown in FIG. 3, steps S307b1 to S307b4 are performed.

S307b1: Optionally, after the storage resumes power supply, the storage controller may send a third message to the controller, where the third message is used to request the target data. The controller receives the third message.

S307b2: The controller may send the target data stored into the second memory to the storage controller after resuming power supply to the controller or receiving the third message. The storage controller receives the target data from the controller.

Similar to S302, in this step, the controller may also send the target data in the following two steps: The controller may read the target data from the second memory, and then send the target data to the storage controller.

It should be noted that the controller may transmit all the target data to the storage through reading and transmission for one or more times.

S307b3: The storage controller stores the target data back into the first memory.

S307b4: The processor (including the controller) may implement the service of the electronic device based on the target data stored into the first memory.

Optionally, because the target data stored into the first memory may include data or instructions required for running of the storage controller, after the electronic device resumes the operating state, the target data needs to be restored to the first memory, to ensure normal operation of the storage. Therefore, in this solution, the target data migrated out of the first memory may be restored to the first memory, to ensure operation of the storage and further ensure operation of the electronic device.

The time consumed by the processor to read the data from the memory is shorter than that consumed by the processor to read the data from the persistent storage unit of the storage. Therefore, this solution can also ensure the read/write efficiency of the processor upon resumption of the operating state, thereby ensuring processor efficiency of the processor and ensuring working efficiency of the storage.

In conclusion, this embodiment of this application provides the data processing method. In the method, when the electronic device enters the power-saving state, the processor may migrate the target data in the first memory of the storage to the second memory of the processor, and then control to cut off power supply to the storage. In this way, when the electronic device resumes the operating state, the processor may directly execute the service of the electronic device based on the target data in the second memory; or the processor migrates the target data in the second memory back to the first memory, and executes the service of the electronic device based on the target data in the first memory. Because the time consumed by the processor to read the data from the memory is shorter than that consumed by the processor to read the data from the persistent storage unit of the storage, the method can not only reduce power consumption of the electronic device in the power-saving state, but also ensure the read/write efficiency of the processor upon resumption of the operating state, thereby ensuring the processing efficiency of the processor. Because the electronic device usually frequently switches between the power-saving state and the operating state, compared with a conventional solution of making the target data in the first memory of the storage persistent, the method provided in this embodiment of this application can avoid a process in which the target data is written to the persistent storage unit and read from the persistent storage unit due to state switching. This can greatly reduce times of reading from and writing to the persistent storage unit, reduce a life loss of the persistent storage unit, and prolong a service life of the persistent storage unit.

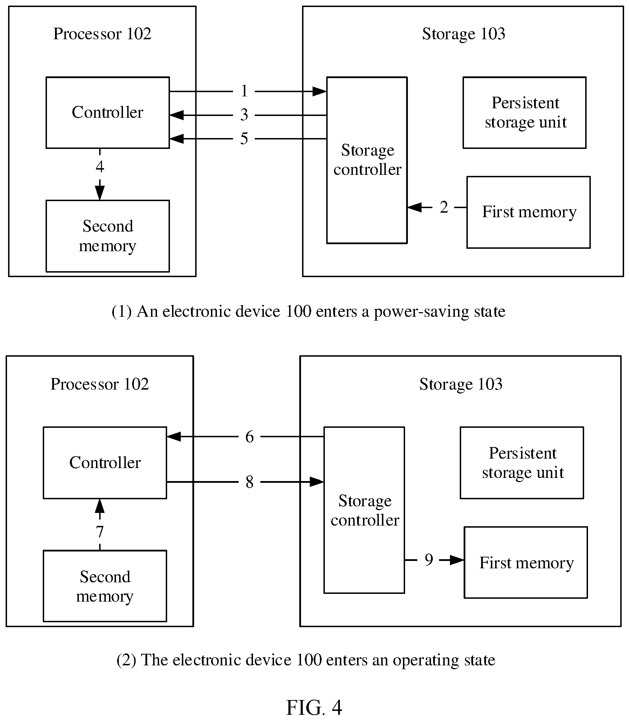

Based on the architecture shown in FIG. 2 and the data processing method provided in the embodiment shown in FIG. 3, an embodiment of this application provides another data processing method. The following describes in detail the method provided in this embodiment of this application with reference to FIG. 4.

As shown in (1) in FIG. 4, when the electronic device 100 enters a power-saving state, a procedure in which the processor 102 and the storage 103 perform the method is as follows.
1. When the electronic device 100 enters the power-saving state, a controller in the processor 102 sends a first message to a storage controller in the storage 103. The first message notifies the storage to control target data stored into a first memory to be sent to the controller.
2. The storage controller reads the target data from the first memory based on the first message.
3. The storage controller sends the read target data to the controller.
4. The controller stores the received target data into a second memory in the processor 102.
5. After transmitting all the target data in the first memory to the controller, the storage controller may further send a second message to the controller, to notify that transmission of the target data in the first memory ends.

In the foregoing steps, when the electronic device 100 enters the power-saving state, the controller in the processor 102 may migrate the target data stored into the first memory in the storage 103 to the second memory of the processor 102. In this way, the processor 102 may control to cut off power supply to the storage. For a specific process, refer to S305 in the embodiment shown in FIG. 3. Details are not described herein again.

In an implementation, when the electronic device 100 resumes an operating state, the controller in the processor 102 may further resume power supply to the storage 103. When the electronic device 100 resumes the operating state, the processor 102 may directly implement a service of the electronic device 100 based on the target data in the second memory.

In another implementation, as shown in (2) in FIG. 4, when the electronic device 100 enters the power-saving state, the processor 102 and the storage 103 may alternatively implement a service of the electronic device 100 in the following steps.

6. After the storage 103 resumes power supply and is powered on, the storage controller may send a third message to the controller. The third message is used to request the target data.

7. The controller may read the target data from the second memory based on the first message.

8. The controller sends the target data to the storage controller.

9. The storage controller stores the target data back into the first memory.

In this way, the processor 102 may implement the service of the electronic device 100 based on the target data stored into the first memory.

Optionally, after transmitting all the target data to the storage controller, the controller may further send a fourth message to the controller, to notify that transmission of the target data ends.

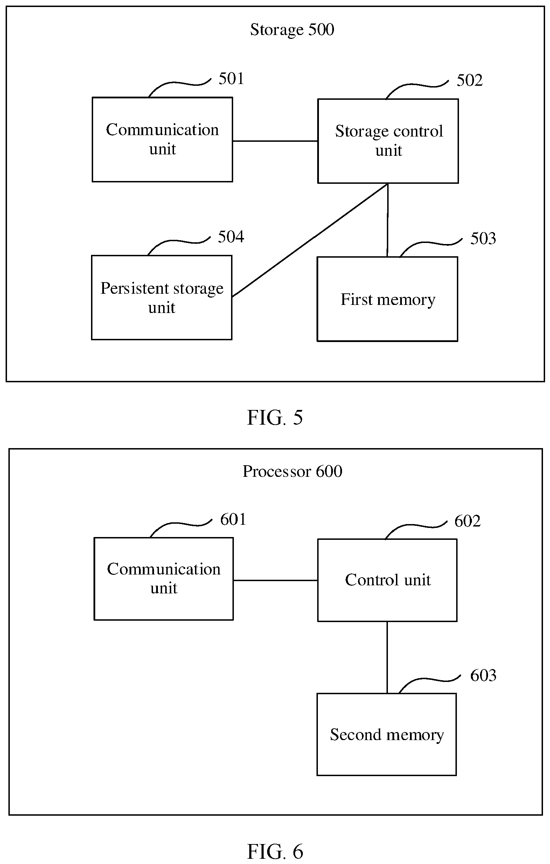

Based on the foregoing embodiments, this application further provides a storage. The storage may be used in the electronic device 100 shown in FIG. 1, and can implement the method provided in the embodiment shown in FIG. 3 or FIG. 4. As shown in FIG. 5, the storage 500 includes a communication unit 501, a storage control unit 502, a first memory 503, and a persistent storage unit 504.

The following describes functions of the units in the storage 500.

The first memory 503 is an internal memory of the storage 500. The first memory 503 may store temporary data or instructions of the storage 500, or instructions or data that needs to be cyclically used.

The communication unit 501 is configured to receive and send data, to implement communication and interaction between the storage 500 and another component (for example, a processor) in the electronic device. For example, the communication unit 501 may be a physical communication interface, for example, a UFS interface (namely, a UPIU) or an SCSI unit. This is not limited in this application.

The storage control unit 502 is configured to: when the electronic device enters a power-saving state, receive a first message from the processor of the electronic device by using the communication unit 501; and send, based on the first message, target data stored into the first memory 503 to the processor, so that the processor stores the target data into a second memory, where the second memory is an internal memory of the processor.

Optionally, the storage control unit 502 is further configured to: after sending the target data stored into the first memory 503 to the processor, send a second message to the processor by using the communication unit 501, where the second message notifies that transmission of the target data in the first memory ends.

Optionally, the storage control unit 502 is further configured to: after the target data stored into the first memory 503 is sent to the processor, cut off power supply to the storage 500.

Optionally, when cutting off power supply to the storage, the storage control unit 502 is specifically configured to: receive a first power-off indication from the processor by using the communication unit 501, and cut off power supply to the storage based on the first power-off indication.

Optionally, the storage control unit 502 is further configured to: when the electronic device enters an operating state, resume power supply to the storage 500.

Optionally, the storage control unit 502 is further configured to: receive the target data from the processor by using the communication unit 501, and store the target data back into the first memory 503.

Optionally, the storage control unit 502 is further configured to: before receiving the target data from the processor by using the communication unit 501, send a third message to the processor by using the communication unit 501, where the third message is used to request the target data.

Optionally, when resuming power supply to the storage, the storage control unit 502 is specifically configured to:
receive a first power-on indication from the processor by using the communication unit 501, and resume power supply to the storage based on the first power-on indication.

Based on the foregoing embodiments, this application further provides a processor. The storage may be used in the electronic device 100 shown in FIG. 1, and can implement the method provided in the embodiment shown in FIG. 3 or FIG. 4. As shown in FIG. 6, the processor 600 includes a communication unit 601, a control unit 602, and a second memory 603.

The following describes functions of the units in the processor 600.

The second memory 603 is an internal memory of the processor 600. The second memory 603 may store temporary data or instructions of the processor 600, or instructions or data that needs to be cyclically used.

The communication unit 601 is configured to receive and send data, to implement communication and interaction between the processor 600 and another component (for example, a processor or a power management module) in the electronic device. For example, the communication unit 601 may be a physical communication interface, for example, a UFS interface (namely, a UPIU) or an SCSI unit. This is not limited in this application.

The control unit 602 is configured to: when the electronic device enters a power-saving state, send a first message to a storage of the electronic device by using the communication unit 601, where the first message notifies the storage to send target data stored into a first memory to the processor 600, and the first memory is an internal memory of the storage; receive the target data from the storage by using the communication unit 601, and store the target data into the second memory, where the second memory is the internal memory of the processor; and control to cut off power supply to the storage.

Optionally, the control unit 602 is further configured to: before controlling to cut off power supply to the storage, receive a second message from the storage by using the communication unit 601, where the second message notifies that transmission of the target data in the first memory ends.

Optionally, when controlling to cut off power supply to the storage, the control unit 602 is specifically configured to:
send a first power-off indication to the storage by using the communication unit 601, where the first power-off indication indicates the storage to cut off power supply; or send a second power-off indication to the power management module of the electronic device by using the communication unit 601, where the second power-off indication indicates the power management module to cut off power supply to the storage.

Optionally, the control unit 602 is further configured to: when the electronic device enters an operating state, control to resume power supply to the storage; and implement a service of the electronic device based on the target data stored into the second memory.

Optionally, the control unit 602 is further configured to: when the electronic device enters an operating state, control to resume power supply to the storage; send the target data in the second memory to the storage by using the communication unit 601, so that the storage stores the target data back into the first memory; and implement a service of the electronic device based on the target data stored into the first memory.

Optionally, the control unit 602 is further configured to: before sending the target data in the second memory to the storage by using the communication unit 601, receive a third message from the storage by using the communication unit 601, where the third message is used to request the target data.

Optionally, when controlling to resume power supply to the storage, the control unit 602 is specifically configured to:
send a first power-on indication to the storage by using the communication unit 601, where the first power-on indication indicates the storage to resume power supply; or send a second power-on indication to the power management module of the electronic device by using the communication unit 601, where the second power-on indication indicates the power management module to resume power supply to the storage.

It should be understood that a specific process in which the units perform the foregoing corresponding steps is described in detail in the foregoing method embodiments. For brevity, details are not described herein.

It should be noted that in embodiments of this application, division into modules is an example, and is merely logical function division. During actual implementation, there may be another division manner. In addition, functional units in embodiments of this application may be integrated into one processing unit, each of the functional units may exist alone physically, or two or more units may be integrated into one unit. The integrated unit may be implemented in a form of hardware, or may be implemented in a form of a software functional unit.

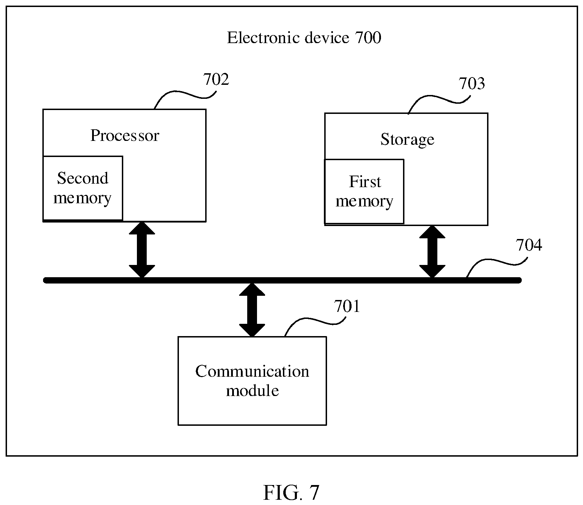

Based on the foregoing embodiments, this application further provides an electronic device. The electronic device includes a processor and a storage. A connection relationship between the processor and the storage is shown in FIG. 2, to implement the method provided in the embodiment shown in FIG. 3 or FIG. 4. As shown in FIG. 7, the electronic device 700 includes a communication module 701, the processor 702, and the storage 703. An internal memory included in the storage 703 is referred to as a first memory, and an internal memory included in the processor 702 is referred to as a second memory. Optionally, the electronic device 700 may further include other components such as a power management module and a battery. This is not limited in this application.

The communication module 701, the processor 702, and the storage 703 are connected to each other. Optionally, the communication module 701, the processor 702, and the storage 703 may be connected to each other through a bus 704. The bus 704 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one thick line is used for representation in FIG. 7, but this does not mean that there is only one bus or only one type of bus. For example, the processor 702 and the storage 703 may be connected through a bus compatible with a UFS interface or an SCSI.

The communication module 701 is configured to receive and send data, to implement communication between the electronic device and another device. For example, the communication module 701 may include a transceiver, a physical interface, an input/output interface, and the like. For example, the transceiver may include the wireless communication module 1011 or the mobile communication module 1012 in the communication unit 101 in the electronic device 100 shown in FIG. 1.

The processor 702 and the storage 703 may interact with each other to implement the method provided in the foregoing embodiment, which includes the following operations.

The processor 702 is configured to: when the electronic device enters a power-saving state, send a first message to the storage 703, where the first message notifies the storage 703 to send target data stored into the first memory to the processor; receive the target data from the storage 703, and stores the target data into the second memory; and control to cut off power supply to the storage 703.

The storage 703 is configured to: when the electronic device enters the power-saving state, receive the first message from the processor 702; and send, based on the first message, the target data stored into the first memory to the processor 702.

For functions of the processor 702 and the storage 703, refer to the descriptions in the foregoing embodiments. Details are not described herein again. In an implementation, the processor 702 may further include a controller, and the controller is configured to perform the step corresponding to the processor 702. The storage 703 may further include a storage controller, and the storage controller is configured to perform the step corresponding to the storage 703.

Optionally, the processor 702 may include a central processing unit (central processing unit, CPU), a GPU, an ISP, an NPU, a combination of at least one of the foregoing, or the like. The processor 702 may further include a hardware chip. When implementing the foregoing functions, the processor 702 may be implemented by hardware, or certainly may be implemented by hardware executing corresponding software.

The storage 703 is configured to store a software program and data. In addition to the first memory, the storage 703 may further include a persistent storage unit. For example, the storage 703 may be an SSD, a UFS, an optical disc, a magnetic disk, another magnetic storage device, or another component including a nonvolatile solid-state storage medium.

Based on the foregoing embodiments, an embodiment of this application further provides a computer program. When the computer program is run on a computer, the computer is enabled to perform the method provided in the foregoing embodiment.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiment.

The storage medium may be any usable medium that can be accessed by the computer. The following provides an example but does not impose a limitation: The computer-readable medium may include a RAM, a ROM, an EEPROM, a CD-ROM, another optical disc storage or magnetic disk storage medium, another magnetic storage device, or any other medium that can carry or store expected program code in a form of instructions or a data structure and can be accessed by the computer.

Based on the foregoing embodiments, an embodiment of this application further provides a chip. The chip is configured to read a computer program stored into a storage, to implement the method provided in the foregoing embodiment.

In conclusion, embodiments of this application provide the data processing method and the electronic device. In the method, when the electronic device enters the power-saving state, the processor may migrate the target data in the first memory of the storage to the second memory of the processor, and then control to cut off power supply to the storage. In this way, when the electronic device resumes the operating state, the processor may directly execute the service of the electronic device based on the target data in the second memory; or the processor migrates the target data in the second memory back to the first memory, and executes the service of the electronic device based on the target data in the first memory. Because the time consumed by the processor to read the data from the memory is shorter than that consumed by the processor to read the data from the persistent storage unit of the storage, the method can not only reduce power consumption of the electronic device in the power-saving state, but also ensure read/write efficiency of the processor upon resumption of the operating state, thereby ensuring processing efficiency of the processor. Because the electronic device usually frequently switches between the power-saving state and the operating state, compared with a conventional solution of making the target data in the first memory of the storage persistent, the method provided in this embodiment of this application can avoid the process in which the target data is written to the persistent storage unit and read from the persistent storage unit due to state switching. This can greatly reduce times of reading from and writing to the persistent storage unit, reduce the life loss of the persistent storage unit, and prolong the service life of the persistent storage unit.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the methods, the devices (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computerimplemented processing. Therefore, the instructions executed on the computer or the another programmable device provide steps for implementing a specific function in one or more procedures in the flowcharts and/or in one or more blocks in the block diagrams.

It is clear that persons skilled in the art can make various modifications and variations to this application without departing from the scope of this application. This application is intended to cover these modifications and variations of this application provided that they fall within the scope of protection defined by the claims of this application and their equivalent technologies.

## Claims

1. A data processing method, applied to a processor of an electronic device, comprising:
sending a first message to a storage of the electronic device when the electronic device enters a power-saving state, wherein the first message notifies the storage to send target data stored into a first memory to the processor, and the first memory is an internal memory of the storage;
receiving the target data from the storage, and storing the target data into a second memory, wherein the second memory is an internal memory of the processor; and
controlling to cut off power supply to the storage.

2. The method according to claim 1, wherein before the controlling to cut off power supply to the storage, the method further comprises:
receiving a second message from the storage, wherein the second message notifies that transmission of the target data in the first memory ends.

3. The method according to claim 1 or 2, wherein the controlling to cut off power supply to the storage comprises:
sending a first power-off indication to the storage, wherein the first power-off indication indicates the storage to cut off power supply; or
sending a second power-off indication to a power management module of the electronic device, wherein the second power-off indication indicates the power management module to cut off power supply to the storage.

4. The method according to any one of claims 1 to 3, wherein the method further comprises:
when the electronic device enters an operating state, controlling to resume power supply to the storage; and
implementing a service of the electronic device based on the target data stored into the second memory.

5. The method according to any one of claims 1 to 3, wherein the method further comprises:
when the electronic device enters an operating state, controlling to resume power supply to the storage;
sending the target data in the second memory to the storage, so that the storage stores the target data back into the first memory; and
implementing a service of the electronic device based on the target data stored into the first memory.

6. The method according to claim 5, wherein before the sending the target data in the second memory to the storage, the method further comprises:
receiving a third message from the storage, wherein the third message is used to request the target data.

7. The method according to claim 5 or 6, wherein the controlling to resume power supply to the storage comprises:
sending a first power-on indication to the storage, wherein the first power-on indication indicates the storage to resume power supply; or
sending a second power-on indication to the power management module of the electronic device, wherein the second power-on indication indicates the power management module to resume power supply to the storage.

8. A data processing method, applied to a storage of an electronic device, comprising:
when the electronic device enters a power-saving state, receiving a first message from a processor of the electronic device; and
sending, based on the first message, target data stored into a first memory to the processor, so that the processor stores the target data into a second memory, wherein the first memory is an internal memory of the storage, and the second memory is an internal memory of the processor.

9. The method according to claim 8, wherein after the sending target data stored into a first memory to the processor, the method further comprises:
sending a second message to the processor, wherein the second message notifies that transmission of the target data in the first memory ends.

10. The method according to claim 8 or 9, wherein after the sending target data stored into a first memory to the processor, the method further comprises:
cutting off power supply to the storage.

11. The method according to claim 10, wherein the cutting off power supply to the storage comprises:
receiving a first power-off indication from the processor, and cutting off power supply to the storage based on the first power-off indication.

12. The method according to any one of claims 8 to 11, wherein the method further comprises:
when the electronic device enters an operating state, resuming power supply to the storage.

13. The method according to claim 12, wherein the method further comprises:
receiving the target data from the processor, and re-storing the target data into the first memory.

14. The method according to claim 13, wherein before the receiving the target data from the processor, the method further comprises:
sending a third message to the processor, wherein the third message is used to request the target data.

15. The method according to any one of claims 12 to 14, wherein the resuming power supply to the storage comprises:
receiving a first power-on indication from the processor, and resuming power supply to the storage based on the first power-on indication.

16. A processor, comprising:
a second memory, a control unit, and a communication unit, wherein
the communication unit is configured to receive and send data; and
the control unit is configured to perform the method according to any one of claims 1 to 7.

17. A storage, comprising:
a first memory, a storage control unit, and a communication unit, wherein
the communication unit is configured to receive and send data; and
the storage control unit is configured to perform the method according to any one of claims 8 to 15.

18. An electronic device, wherein the electronic device comprises:
a processor and a storage, wherein
the processor is configured to: when the electronic device enters a power-saving state, send a first message to the storage, wherein the first message notifies the storage to send target data stored into a first memory to the processor; receive the target data from the storage, and store the target data into a second memory; and control to cut off power supply to the storage, wherein the first memory is an internal memory of the storage, and the second memory is an internal memory of the processor; and
the storage is configured to: when the electronic device enters the power-saving state, receive the first message from the processor; and send, based on the first message, the target data stored into the first memory to the processor.

19. The electronic device according to claim 18, wherein
the storage is further configured to: after sending the target data stored into the first memory to the processor, send a second message to the processor, wherein the second message notifies that transmission of the target data in the first memory ends; and
the processor is further configured to: before controlling to cut off power supply to the storage, receive the second message from the storage.

20. The electronic device according to claim 18 or 19, wherein
the processor is specifically configured to send a first power-off indication to the storage, wherein the first power-off indication indicates the storage to cut off power supply; and the storage is further configured to: receive the first power-off indication from the processor, and cut off power supply to the storage based on the first power-off indication; or
the electronic device further comprises a power management module; the processor is specifically configured to send a second power-off indication to the power management module, wherein the second power-off indication indicates the power management module to cut off power supply to the storage; and the power management module is configured to cut off power supply to the storage based on the second power-off indication.

21. The electronic device according to any one of claims 18 to 20, wherein
the processor is further configured to: when the electronic device enters an operating state, control to resume power supply to the storage; and implement a service of the electronic device based on the target data stored into the second memory.

22. The electronic device according to any one of claims 18 to 20, wherein
the processor is further configured to: when the electronic device enters an operating state, control to resume power supply to the storage; and send the target data in the second memory to the storage;
the storage is further configured to: receive the target data from the processor, and store the target data back into the first memory; and
the processor is further configured to implement a service of the electronic device based on the target data stored into the first memory.

23. The electronic device according to claim 22, wherein
the storage is further configured to: before receiving the target data from the processor, send a third message to the processor, wherein the third message is used to request the target data; and
the processor is further configured to: before sending the target data in the second memory to the storage, receive the third message from the storage.

24. The electronic device according to any one of claims 21 to 23, wherein
the processor is specifically configured to send a first power-on indication to the storage, wherein the first power-on indication indicates the storage to resume power supply; and the storage is further configured to: receive the first power-on indication from the processor, and resume power supply to the storage based on the first power-on indication; or
the electronic device further comprises the power management module; the processor is specifically configured to send a second power-on indication to the power management module, wherein the second power-on indication indicates the power management module to resume power supply to the storage; and the power management module is configured to resume power supply to the storage based on the second power-on indication.
